# EUROPÄISCHE PATENTANMELDUNG

(11) **EP 3 318 401 A1**
(43) Veröffentlichungstag der Anmeldung: **09.05.2018**
(21) Anmeldenummer: 16197260.9
(22) Anmeldetag: 04.11.2016
(51) Int. Cl.: B32B 5/02, B32B 5/14, B32B 5/18, B32B 5/20, B32B 5/24, B32B 3/30, B32B 3/26, D04H 1/68, B32B 5/32, B32B 5/08, B32B 7/02

(54) **HOCHABSORPTIVES SCHALLISOLATIONSKRAFTFAHRZEUGVERKLEIDUNGSELEMENT SOWIE HOCHABSORPTIV-SCHALLISOLATIONSELEMENT-HERSTELLUNGSVERFAHREN DAZU**

(71) Anmelder: Adler Pelzer Holding GmbH, 58454 Witten (DE)
(72) Erfinder: Schulze, Volkmar, 84069 Schierling (DE); Becker, Helmut, 44894 Bochum (DE); Kursch, Volker, 45141 Essen (DE); Tarello, Maurizio, 10014 Caluso (IT); Nicolai, Norbert, 46514 Schermbeck-Gahlen (DE)
(74) Vertreter: Hansen, Jochen

(57) **Zusammenfassung**

Die Erfindung betrifft ein hochabsorptives Schallisolationskraftfahrzeugverkleidungselement-Herstellungsverfahren umfassend einen vierschichtigen Aufbau aus einer ersten Schaumschicht, einer zweiten Schaumschicht, einer Faservlies-Schaumschicht und einer Faservliesschicht.

Ferner betrifft die Erfindung ein hochabsorptives Schallisolationskraftfahrzeugverkleidungselement.

## Beschreibung

Die Erfindung betrifft ein hochabsorptives Schallisolationskraftfahrzeugverkleidungselement-Herstellungsverfahren umfassend einen vierschichtigen Aufbau aus einer ersten Schaumschicht, einer zweiten Schaumschicht, einer Faservlies-Schaumschicht und einer Faservliesschicht.

Ferner betrifft die Erfindung ein hochabsorptives Schallisolationskraftfahrzeugverkleidungselement.

Aus dem **Stand der Technik** sind unterschiedliche Schallisolationselemente sowie dazugehörige Herstellungsverfahren bekannt, mittels denen insbesondere Strukturen geschaffen werden können, die entstehende Geräusche, beispielsweise im Motorraum, dämmen können, so dass Geräusche nicht oder nur wenig an die Umwelt oder in den Fahrgastraum eines Kraftfahrzeuges gelangen.

Im Stand der Technik sind sehr viele und unterschiedliche Zusammensetzungen von Schallisolationskraftfahrzeugverkleidungselementen sowie von Herstellungsverfahren dazu bekannt, die alle unterschiedliche Ansätze verfolgen und sich in kleinen aber elementaren Unterschieden differenzieren. Nachfolgend soll der relevante Stand der Technik aufgeführt werden.

Aus der Druckschrift DE 39 05 607 A1 ist eine Bodenverkleidung mit einem Schichtaufbau zur Herstellung einer Schallisolierung für Fahrzeuge bekannt, die aus einer akustisch wirksamen Schicht aus einem Schaum und wenigstens einem Vlies besteht, wobei wenigstens eine akustisch wirksame Schicht in Form einer Zwischenfolie eingebracht ist.

Aus der Druckschrift DE 10 2013 104 715 A1 ist ein schalldämmendes Akustikelement bekannt, das wenigstens eine Schallabsorbervliesschicht, wobei diese Vliesschicht eine schaumflussregulierende oder schaumflusshemmende Schicht aufweist und eine Schallabsorberschaumschicht aufweist, wobei diese durch Hinterschäumen stoffschlüssig mit dem porösen Faservlies verbunden ist und diese Durchdringung bis zur schaumflussregulierenden bzw. -hemmenden Lage erfolgt.

Die **Probleme im Stand der Technik** sind im Wesentlichen, dass es derzeit nicht möglich ist, ein kostengünstiges hochabsorptives Schallisolationselement herzustellen, das folgende Anforderungen erfüllt:
- höhere Schallabsorbtion als mit den im Stand der Technik bekannten Schallisolations kraftfahrzeugverkleidungselementen;
- einfaches Herstellen und Reduktion der Einzelkomponenten, so dass eine Kostenreduktion während der Herstellung möglich ist, da bisher komplexe Systeme von wenigstens drei oder vier Einzelelementen notwendig waren, wobei diese Einzelelemente zunächst miteinander auf schwierige Art und Weise verknüpft werden mussten, wie beispielsweise das Einbringen einer Trennfolie in ein Vlies oder dergleichen;
   sowie
- geringes Gewicht des Lagenaufbaus eines Schallisolationskraftfahrzeugverkleidungs elements.

Im Allgemeinen können die im Stand der Technik beschriebenen Aufbauten durch einen Mehrlagenaufbau beschrieben werden, wobei hierbei stets sehr komplexe Verfahren und Schutzmechanismen von Nöten sind, so dass beim Hinterschäumen der eine Schaum nicht vollständig in eine Vliesschicht eindringt.

Es wurde insbesondere erkannt, dass bei im Stand der Technik befindlichen hochabsorptiven Schallisolationskraftfahrzeugverkleidungselementen allesamt nicht alle diese Anforderungen erfüllt werden können.

Der vorliegenden Erfindung liegt die **Aufgabe** zugrunde, ein günstiges und hochabsorptives Schallisolationselement sowie dazugehöriges Herstellungsverfahren aufzuzeigen, wobei eine sehr hohe akustische Wirksamkeit erzielt und entsprechend kostengünstig produziert werden soll, wobei die Einfachheit des Herstellungsvorganges durch Verwendung lediglich weniger Einzelzutaten im Vordergrund stehen, jedoch gleichzeitig die Effektivität erhöht und gesteigert werden soll.

**Gelöst** wird diese Aufgabe mit einem hochabsorptiven Schallisolationskraftfahrzeugverkleidungselement-Herstellungsverfahren gemäß Hauptanspruch und einem hochabsorptiven Schallisolationskraftfahrzeugverkleidungselement gemäß nebengeordnetem Anspruch.

Das hochabsorptives Schallisolationskraftfahrzeugverkleidungselement-Herstellungsverfahren umfassend einen vierschichtigen Aufbau aus einer ersten Schaumschicht, einer zweiten Schaumschicht, einer Faservlies-Schaumschicht und einer Faservliesschicht umfasst die Schritte:
I) Bereitstellen eines Faservlieses der Dicke d;
II) Komprimieren des Faservlieses auf eine komprimierte Dicke d';
III) Schäumen des zweiten Schaumes auf einer Oberseite der komprimierten Faservlieslage mittels einer ersten formgebenden Schaumformhälfte, wobei der zweite Schaum wenigstens teilweise in die Faservlieslage hineindiffundiert und eine Zwischenschicht, nämlich Schicht mit erhöhter Dichte ausbildet, wobei diese Zwischenschicht aus einer Teildicke der Faservliesschicht und dem zweiten Schaum besteht,
IV) Schäumen des ersten Schaumes auf der Faservlies-fernen Oberseite des zweiten Schaumes, wobei auf der zweiten-Schaum-fernen Seite des ersten Schaumes eine äußere Oberflächenstruktur auf dem ersten Schaum gebildet wird.

Durch das Komprimieren des Faservlieses zu Beginn wird das Faservlies derart vorbereitet, dass der zweite Schaum, der zunächst auf die Oberfläche des Faservlieses aufgebracht wird, lediglich nur teilweise und nicht vollständig in das Faservlies hineindiffundieren kann.

Durch die Verwendung zweier Schaumstoffe mit unterschiedlichen Eigenschaften werden zudem die Anforderungen an verbesserte Schallabsorption und verringertes Gewicht erfüllt, wobei aber gleichzeitig die notwendige, zwar geringe, Bauteilfestigkeit gewährleistet ist.

Insbesondere kann auf entsprechende Sperrschichten und Trennlagen verzichtet werden.

Das Schäumen kann in Schritt III) in einem ersten Schaumwerkzeug erfolgen. Weiter kann das Schäumen in Schritt IV) in einem zweiten Schaumwerkzeug oder in dem ersten Schaumwerkzeug mit ausgewechselter oberer Schaumformhälfte erfolgen.

Wenn die Oberflächenstruktur des Schaumsystems des zweiten Schaums, insbesondere bei Ausgestaltung mit einer Rippenstruktur, der Oberflächenstruktur des ersten Schaums entspricht, dann kann das Schäumen sowohl des ersten als auch des zweiten Schaumsystems in demselben Schäumwerkzeug erfolgen. Man verändert beim Schäumen des ersten Schaumsystems nur das Spaltmaß; nämlich um die Dicke des ersten Schaumsystems. Dies stellt einen erheblichen Kostenvorteil da, da nur ein Schäumwerkzeug benötigt wird.

Beim Schäumen in Schritt III) und/oder IV) kann in einer besonders bevorzugten Variante ein Ausbilden / Herstellen einer Rippen-, Blasen-, Aus- und/oder Einbuchtungsoberflächenstruktur auf der jeweiligen Faservlies-fernen Seite des jeweiligen Schaumes erfolgen. Hierdurch und durch die unterschiedlichen Eigenschaften des ersten und des zweiten Schaumsystems wird überraschenderweise die Pegelreduktion deutlich erhöht, so dass zusätzlich eine Schalldämpfung möglich ist. Zusätzlich zu der Schalldämpfung wird aber auch die Struktur des Bauteils aufgrund der unterschiedlichen Schäume in Kombination mit der hergestellten Oberflächenstruktur erhöht.

Das hochabsorptive Schallisolationskraftfahrzeugverkleidungselement, insbesondere hergestellt mit einem hier offenbarten und dargestellten hochabsorptiven Schallisolationskraftfahrzeugverkleidungselement-Herstellungsverfahren, weist einen vierlagigen Aufbau auf, wobei dieser Aufbau umfasst:
- eine erste Schaumschicht,
- eine zweite Schaumschicht
- eine Schicht mit erhöhter Dichte und
- eine Faservliesschicht,
wobei
- die Schaumschichten unterschiedliche Dichten, Verlustfaktoren und/oder E-Module aufweisen,
   und
- der an die Faservliesschicht angrenzende Schaum in das Faservlies teilweise hineindiffundiert ist und die Schicht mit erhöhter Dichte bildet,
wobei
die Oberfläche des ersten und/oder zweiten Schaumstoffes auf der Faservlies-fernen Oberseite der ersten und/oder zweiten Schaumschicht eine Rippen-, Blasen-, Aus- und/oder Einbuchtungsstruktur aufweist.

In einer weiteren bevorzugten Ausgestaltungsvariante besteht das Faservlies aus PET Fasern oder das Faservlies besteht aus PET Fasern und BiCo Fasern, wobei dann der Anteil von 1 bis 50 Gew.-% oder von 8 bis 20 Gew.-% oder 10 Gew.-% BiCo Fasern an dem Faservlies beträgt.

Des Weiteren kann das Faservlies
(a) synthetische Fasern umfassen, die ausgewählt sind aus der Gruppe umfassend Polyesterfasern, insbesondere Polyethylenterephthalatfasern, Polyamidfasern, insbesondere Nylon 6 und/oder Nylon 66, Polyolefinfasern, insbesondere Polypropylenfasern und/oder Polyethylenfasern und Acrylfasern sowie deren Fasergemische einschließlich Bikomponentenfasern und Multikomponentenfasern,
(b) Naturfasern umfassen, die ausgewählt sind aus der Gruppe umfassend Rohbaumwollfasern, Hanffasern, Cocosfasern, Kenaffasern, Jutefasern und Sisalfasern einschließlich deren Gemische
   oder
(c) Gemische der synthetischen Fasern der Gruppe (a) und (b) enthalten.

Weiterhin kann insbesondere das Faservlies ein Flächengewicht von 400g/m² bis 1800 g/m², insbesondere 600 g/m² bis 1200 g/m² aufweisen und bzw. oder die Schicht mit erhöhter Dichte kann im Bereich von 300 g/m² bis 1500 g/m² liegen und / oder insbesondere ein Flächengewicht von 350 g/m² bis 800 g/m² aufweisen.

Diesbezüglich kann zusätzlich mit einer CO₂-Beladung des PUR-Schaumes gearbeitet werden. Die Beladung kann im Isozyanat oder im Polyol erfolgen, wobei auch beide beladen sein können. Des Weiteren besteht die Möglichkeit der Beladung im Mischkopf. Anstatt einer CO₂-Beladung kann auch Stickstoff, Pentan oder Druckluft verwendet werden.

Bevorzugt kann die erste und/oder zweite Schaumschicht Blasenhohlräume enthalten.

Die Schaumsysteme sind in einer besonders bevorzugten Ausführungsvariante aus PUR. Das erste Schaumsystem kann eine Dichte von 40 bis 90 g/l, einen Verlustfaktor von 0,15 bis 0,26und/oder einen E-Modul von 45 bis 180 kN/m² haben. Weiter kann das zweite Schaumsystem eine Dichte von 50 bis 150 g/l, einen Verlustfaktor von 0,15 bis 0,55 und/oder einen E-Modul von 20 bis 300 kN/m² haben.

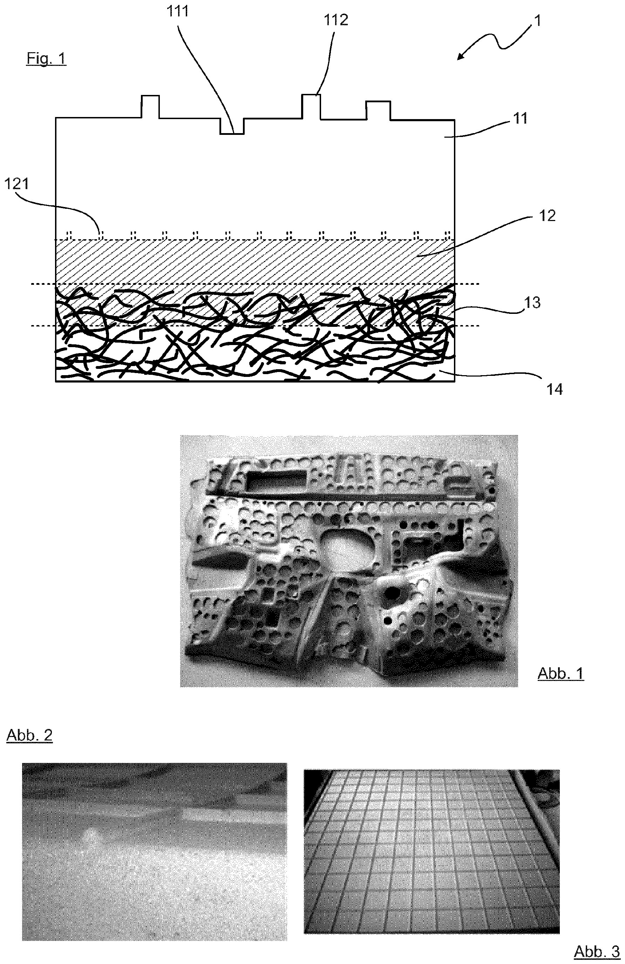

Nachfolgend werden Ausführungsbeispiele der Erfindung anhand der beiliegenden Zeichnung Fig. 1 und den Abbildungen Abb. 1 bis 5 in der **Figuren- und Abbildungsbeschreibung** detailliert beschrieben, wobei diese die Erfindung erläutern sollen und nicht beschränkend zu werten sind:

Es zeigen:
- Fig. 1: ein schematisches Ausführungsbeispiel des offenbarten hochabsorptiven Schallisolationskraftfahrzeugverkleidungselement 1;
- Abb. 1: ein Ausführungsbeispiel der Oberflächenstruktur eines fertigen hochabsorptiven Schallisolationskraftfahrzeugverkleidungselementes 1;
- Abb. 2: ein Ausführungsbeispiel der Rippenstruktur der Oberflächen des ersten Schaumes 11 in einer Nahansicht;
- Abb. 3: das Ausführungsbeispiel der Rippenstruktur der Oberfläche des ersten Schaumes 11 gemäß Abb. 2 in einer Draufsicht;
- Abb. 4: einen ersten Querschnitt zum Schichtaufbau eines exemplarisch hergestellten hochabsorptiven Schallisolationskraftfahrzeugverkleidungselementes 1 und
- Abb. 5: einen zweiten Querschnitt zum Schichtaufbau eines exemplarisch hergestellten hochabsorptiven Schallisolationskraftfahrzeugverkleidungselementes 1.

In **Fig. 1** ist ein schematisches Ausführungsbeispiel des offenbarten hochabsorptiven Schallisolationskraftfahrzeugverkleidungselements 1 dargestellt.

Dieses hochabsorptive Schallisolationskraftfahrzeugverkleidungselements 1 weist einen vierlagigen Schichtaufbau 11, 12, 13, 14 auf. Die unterste Schicht ist eine reine Faservliesschicht 14. Darüber ist in dem Verbund eine Schicht mit erhöhter Dichte 13 ausgebildet, die gebildet wird aus einer Teildicke des Faservlieses 14 und dem darüber angeordneten zweiten Schaum 12, wobei der zweite Schaum 12 während der Herstellung in die Faservliesschicht 14 hineindiffundiert ist bzw. bewusst eingebracht wurde, wobei dieses Hineindiffundieren teilweise erfolgt, also nicht vollständig. Die oberste und damit vierte Schicht ist ein erster Schaum 11, der andere Eigenschaften aufweist als der zweite Schaum 12.

Weiter ist optional hier gestrichelt dargestellt eine auf der Oberfläche des zweiten Schaums 12 hergestellte Rippenstruktur 121 angeordnet (vgl. Abb. 3).

Die Oberfläche des ersten Schaums 11 weist Vertiefungen 111 und Erhöhungen 112 auf.

Die Oberflächenstruktur der Schaumsysteme 11 und 12 kann somit entweder gleich oder aber auch unterschiedlich ausgebildet sein bzw. werden.

In **Abb. 1** ist ein Ausführungsbeispiel der Oberflächenstruktur eines fertigen hochabsorptiven Schallisolationskraftfahrzeugverkleidungselementes 1 dargestellt.

Hierbei erkennt man notwendige Aussparungen und Ausbuchtungen sowie eine mit Ein-111 und Ausbuchtungen 112, in Ausführung von Vertiefungen 111 bzw. Erhöhungen 112 versehene Oberflächenstruktur.

**Abb. 2** zeigt ein Ausführungsbeispiel der Rippenstruktur 121 der Oberflächen des ersten Schaumes 11 in einer Nahansicht.

Exemplarisch wurde hier eine Oberflächenstruktur erstellt, die Rippen 121 aufweist, die eine Höhe von ca. 8 mm und eine Breite von ca. 5 mm aufweisen. Diese Rippen 121 haben die Eigenschaft sowohl an der Oberfläche des ersten Schaumes 11 als auch an der Oberfläche des zweiten Schaumes 12, nämlich der Grenzschicht zwischen dem ersten Schaum 11 und dem zweiten Schaum 12, eine Geräuschdämpfung herbeizuführen, so dass beispielsweise Geräusche aus dem Motorraum zusätzlich durch diese Eigenschaft gedämpft in den Fahrgastraum gelangen.

Weiter zeigt **Abb. 3** das Ausführungsbeispiel der Rippenstruktur 121 der Oberfläche des ersten Schaumes 11 gemäß Abb. 2 in einer Draufsicht.

An dieser Stelle wird darauf hingewiesen, dass als Zwischenprodukt die Oberfläche des zweiten Schaums 12 vergleichbar, beispielsweise mit einer Rippenstruktur 121, ausgebildet sein kann, wobei der erste Schaum 11 im weiteren Prozess auf diese Oberfläche aufgebracht wird.

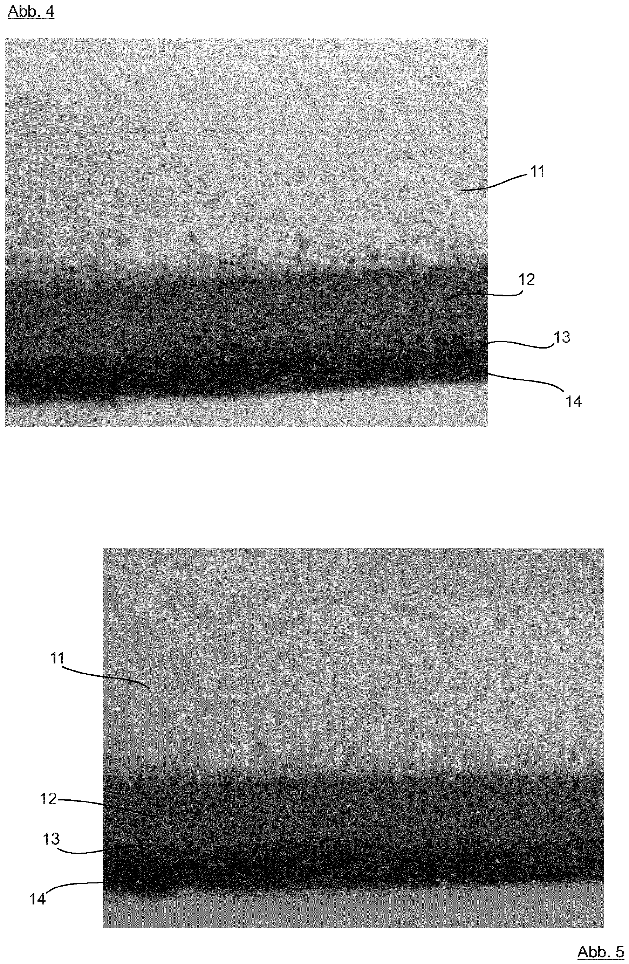

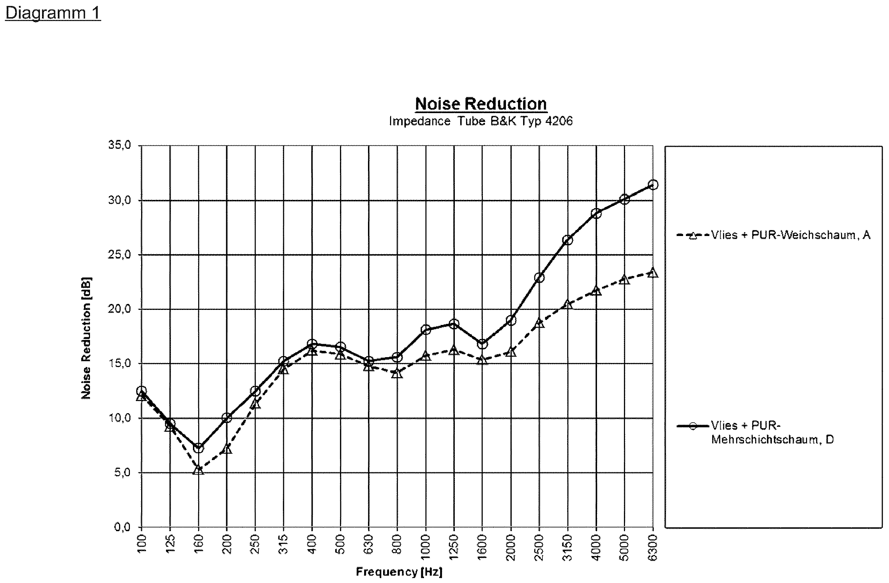

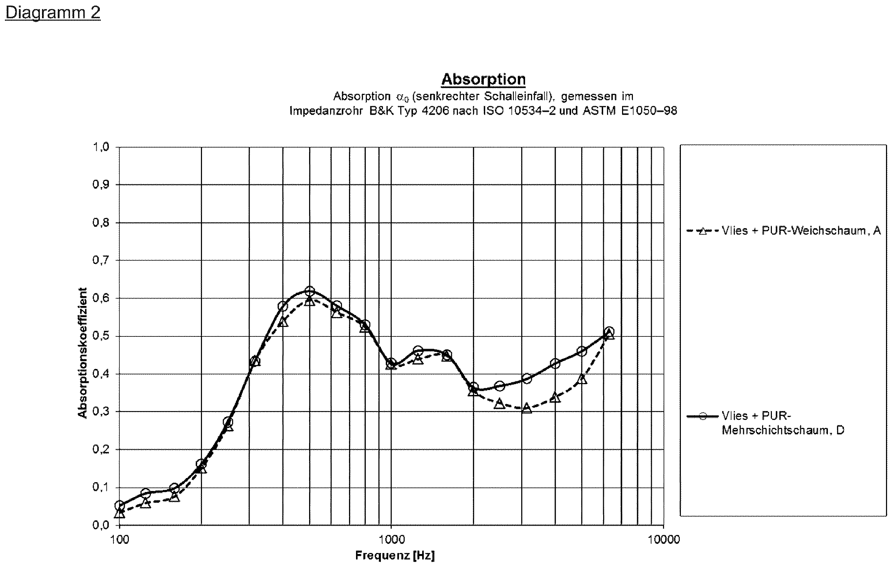

In Abb. 4 ist ein erster Querschnitt zum Schichtaufbau eines exemplarisch hergestellten hochabsorptiven Schallisolationskraftfahrzeugverkleidungselementes 1 gezeigt.

Das hochabsorptive Schallisolationskraftfahrzeugverkleidungselement 1 besteht aus dem vierlagigen Schichtaufbau, der in dieser Abbildung gut zu erkennen ist, nämlich beginnend von unten als erstes eine Faservliesschicht 14, darüber eine Schicht mit erhöhter Dichte 13, die anteilig aus dem Faservlies 14 und dem zweiten Schaum 12, der in das Faservlies 14 teilweise hineindiffundiert ist, besteht, gefolgt von der tatsächlichen Schicht des zweiten Schaums 12 und der abschließenden obersten Schicht, nämlich dem ersten Schaum 11.

Dieses exemplarisch dargestellte Bauteil hat eine Gesamtdicke von 20 mm, wobei zunächst ein PET-Feinfaservlies mit 15 % BiCo-Fasern von einer ersten Dicke d = 25 mm auf eine reduzierte Dicke d' = 5 mm komprimiert bzw. formverpresst wurde. Im Anschluss wurde diese verpresste Vlieslage 14 in ein Schäumwerkzeug eingelegt und die Schäumform geschlossen, wobei nach erfolgter Abdichtung der Form auf der Vlieslage 14 ein Schäumen mittels des zweiten Schaumsystems 12, mit folgenden Eigenschaften Dichte 150 g/l, Verlustfaktor 0,34, E-Modul 85 kN/m², erfolgte. Hierbei wurde die Faservlieslage 14 mittels des zweiten Schaumes 12 hinterschäumt, wobei während des Hinterschäumens der zweite Schaum 12 in die Faservliesschicht 14 teilweise hineindiffundiert ist.

Nach einer Reaktionszeit von 50s wurde die obere Schäumformhälfte ausgewechselt. Die neue Oberform hatte eine entsprechende definierte Rippenstruktur 121 mit den Eigenschaften 50mm x 50mm Rastermaß, eine Rippenhöhe von 8mm sowie eine Rippenbreite von 5mm.

Im Anschluss erfolgte das Schäumen mit dem ersten Schaumsystem 11 mit den Eigenschaften Dichte 75 g/l, einem Verlustfaktor 0,17 und einem E-Modul 45 kN/m², wobei der zweite Schaum 12 mit dem ersten Schaumsystem 11 hinterschäumt worden ist.

Nach einer Reaktionszeit von 60s wurde die Schäumform erneut geöffnet und das Bauteil 1 herausgenommen und im Anschluss auf die gewünschte Endform gestanzt.

Während des Schäumens ist der Schaum des zweiten Schaumsystem 12 in die verpresste Faservlieslage teilweise hineindiffundiert und hat eine Schicht mit einem Flächengewicht von 500 g/m² gebildet, so dass sich diese Schicht 13 von der reinen Faservliesschicht 14 unterscheidet, da die Faservliesschicht 14 ein Flächengewicht von 800g/m² aufwies.

**Abb. 5** zeigt einen zweiten Querschnitt zum Schichtaufbau eines exemplarisch hergestellten hochabsorptiven Schallisolationskraftfahrzeugverkleidungselementes 1.

Der offenbarte Schichtaufbau ist auch in diesem Querschnitt zu erkennen, wobei wieder die Schichten Faservlies 14, Schicht mit erhöhter Dichte 13, zweite Schaumschicht 12 und erste Schaumschicht 11 übereinander liegen.

Ferner sind in den anliegenden zwei Diagrammen entsprechende Messungen dargestellt, die weiter die Erfindung erläutern:

In **Diagramm 1** ist die Noise Reduction (Pegelreduktion) zweier Schaumsysteme dargestellt, wobei hierbei ein im Stand der Technik bekanntes System aus Vlies und PUR-Weichschaum, A einem erfindungsgemäßen Vlies und PUR-Mehrschichtschaum, D gegenübergestellt ist.

Hierbei ist eine deutlich erhöhte Pegelreduktion des erfindungsgemäßen Verkleidungselementes (D) gegenüber einem einfach hinterschäumten Vlies (A) des Standes der Technik zu erkennen.

Weiter ist in **Diagramm 2** die Absorption beider aus dem Diagramm 1 bekannten Verkleidungselemente dargestellt, wobei hierbei die unterschiedlichen Verhalten der beiden Systeme (A und D) erkennbar sind.

### Bezugszeichenliste

- 1: hochabsorptives Schallisolationskraftfahrzeugverkleidungselement
- 11: erster Schaum
- 111: Vertiefungen
- 112: Erhöhungen
- 12: zweiter Schaum
- 121: Rippen
- 13: Faservliesschicht mit erhöhter Dichte
- 14: Faservlies

## Patentansprüche

1. Hochabsorptives Schallisolationskraftfahrzeugverkleidungselement-Herstellungsverfahren umfassend einen vierschichtigen Aufbau aus einer ersten Schaumschicht (11), einer zweiten Schaumschicht (12), einer Faservlies-Schaumschicht (13) und einer Faservliesschicht (14) umfassend die Schritte:
I) Bereitstellen eines Faservlieses (14) der Dicke d;
II) Komprimieren des Faservlieses (14) auf eine komprimierte Dicke d';
III) Schäumen des zweiten Schaumes (12) auf einer Oberseite der komprimierten Faservlieslage (14) mittels einer ersten formgebenden Schaumformhälfte, wobei der zweite Schaum (12) wenigstens teilweise in die Faservlieslage (14) hineindiffundiert und eine Zwischenschicht, nämlich Schicht mit erhöhter Dichte (13) ausbildet, wobei diese Zwischenschicht (13) aus einer Teildicke der Faservliesschicht (14) und dem zweiten Schaum (12)
besteht,
IV) Schäumen des ersten Schaumes (11) auf der Faservlies-fernen Oberseite des zweiten Schaumes (12), wobei auf der zweiten-Schaum-fernen Seite des ersten Schaumes (11) eine äußere Oberflächenstruktur auf dem ersten Schaum (11) gebildet wird.

2. Hochabsorptives Schallisolationskraftfahrzeugverkleidungselement-Herstellungsverfahren nach Anspruch 1,
**dadurch gekennzeichnet, dass**
das Schäumen in Schritt III) in einem ersten Schaumwerkzeug erfolgt.

3. Hochabsorptives Schallisolationskraftfahrzeugverkleidungselement-Herstellungsverfahren nach Anspruch 1 oder 2,
**dadurch gekennzeichnet, dass**
das Schäumen in Schritt IV) in einem zweiten Schaumwerkzeug oder in dem ersten Schaumwerkzeug mit ausgewechselter oder gleichbehaltener oberer Schaumformhälfte erfolgt.

4. Hochabsorptives Schallisolationskraftfahrzeugverkleidungselement-Herstellungsverfahren nach Anspruch 1, 2 oder 3,
**dadurch gekennzeichnet, dass**
beim Schäumen in Schritt III) und/oder IV) ein Ausbilden / Herstellen einer Rippen-, Blasen-, Aus- und/oder Einbuchtungsoberflächenstruktur auf der jeweiligen Faservlies-fernen Seite des jeweiligen Schaumes (11, 12) erfolgt.

5. Hochabsorptives Schallisolationskraftfahrzeugverkleidungselement (1), insbesondere hergestellt mit einem Hochabsorptives Schallisolationskraftfahrzeugverkleidungselement-Herstellungsverfahren nach einem der vorangehenden Ansprüche,
**aufweisend**
einen vierlagigen Aufbau, umfassend:
- eine erste Schaumschicht (11),
- eine zweite Schaumschicht (12)
- eine Schicht mit erhöhter Dichte (13) und
- eine Faservliesschicht (14),
wobei
- die Schaumschichten (11, 12) unterschiedliche Dichten, Verlustfaktoren und/oder E-Module aufweisen,
und
- der an die Faservliesschicht (14) angrenzende Schaum (12) in das Faservlies (14) teilweise hineindiffundiert ist und die Schicht mit erhöhter Dichte (13) bildet,
wobei
die Oberfläche des ersten (11) und/oder zweiten Schaumstoffes (12) auf der Faservlies-fernen Oberseite der ersten (11) und/oder zweiten Schaumschicht (12) eine Rippen-, Blasen-, Aus- und/oder Einbuchtungsstruktur aufweist.

6. Hochabsorptives Schallisolationskraftfahrzeugverkleidungselement (1) nach dem vorangehenden Anspruch,
**dadurch gekennzeichnet, dass**
das Faservlies aus PET Fasern besteht;
oder
das Faservlies aus PET Fasern besteht und BiCo Fasern enthält, wobei der Anteil von 1 bis 50 Gew.-% oder von 8 bis 20 Gew.-% oder 10 Gew.-% beträgt;
oder
das Faservlies synthetische Fasern umfasst, die ausgewählt sind aus der Gruppe a), nämlich Polyesterfasern, Polyethylenterephthalatfasern, Polyamidfasern, Nylon 6, Nylon 66, Polyolefinfasern, Polypropylenfasern, Polyethylenfasern, und/oder Acrylfasern, sowie deren Fasergemische einschließlich Bikomponentenfasern und Multikomponentenfasern;
oder
das Faservlies Naturfasern umfasst, die ausgewählt sind aus der Gruppe b), nämlich Rohbaumwollfasern, Hanffasern, Cocosfasern, Kenaffasern, Jutefasern und/oder Sisalfasern einschließlich deren Gemische;
oder
das Faservlies Gemische der synthetischen Fasern der Gruppe a) und b) enthält.

7. Hochabsorptives Schallisolationskraftfahrzeugverkleidungselement (1) nach einem der zwei vorangehenden Ansprüche,
**dadurch gekennzeichnet, dass**
das Faservlies (14) ein Flächengewicht von 800g/m² oder ein Flächengewicht im Bereich von 400 g/m² bis 1800 g/m² oder ein Flächengewicht im Bereich von 600 g/m² bis 1200 g/m²
und/oder
die Schicht mit erhöhter Dichte (13) ein Flächengewicht von 500 g/m² oder ein Flächengewicht im Bereich von 300 g/m² bis 1500 g/m² oder ein Flächengewicht im Bereich von 350 g/m² bis 800 g/m²
aufweist.

8. Hochabsorptives Schallisolationskraftfahrzeugverkleidungselement (1) nach einem der drei vorangehenden Ansprüche,
**dadurch gekennzeichnet, dass**
die erste (11) und/oder zweite Schaumschicht (12) Blasenhohlräume enthält.

9. Hochabsorptives Schallisolationskraftfahrzeugverkleidungselement (1) nach einem der vier vorangehenden Ansprüche,
**dadurch gekennzeichnet, dass**
das erste und/oder das zweite Schaumsystem (11, 12) mit CO₂ beladen ist.

10. Hochabsorptives Schallisolationskraftfahrzeugverkleidungselement (1) nach einem der fünf vorangehenden Ansprüche,
**dadurch gekennzeichnet, dass**
- die Schaumsysteme (11, 12) aus PUR sind
und/oder
- das erste Schaumsystem (11) eine Dichte von 40 bis 90 g/l, einen Verlustfaktor von 0,15 bis 0,26 und/oder einen E-Modul von 45 bis 180 kN/m² hat und/oder
- das zweite Schaumsystem (12) eine Dichte von von 50 bis 150 g/l,
einen Verlustfaktor von 0,15 bis 0,55 und/oder einen E-Modul von 20 bis 300 kN/m² hat;
wobei die Eigenschaften des Verlustfaktors, der Dichte und/oder des E-Moduls des ersten (11) und des zweiten Schaumsystems zueinander unterschiedlich sind.
